# EUROPÄISCHE PATENTSCHRIFT

(11) **EP 4 065 638 B1**
(45) Veröffentlichungstag und Bekanntmachung des Hinweises auf die Patenterteilung: **25.11.2026**
(21) Anmeldenummer: 20811629.3
(22) Anmeldetag: 27.11.2020
(51) Int. Cl.: C08K 9/02, C08K 3/22, C08K 3/34, C09D 4/00

(54) **PARTIKULÄRER FÜLLSTOFF, DESSEN HERSTELLUNG UND VERWENDUNG**
PARTICULATE FILLER, PRODUCTION AND USE THEREOF
CHARGE PARTICULAIRE, PRODUCTION ET UTILISATION CORRESPONDANTES

(30) Priorität: 29.11.2019 EP 19212432
(43) Veröffentlichungstag der Anmeldung: 05.10.2022
(73) Patentinhaber: SUSONITY Commercial GmbH, 64579 Gernsheim (DE)
(72) Erfinder: BAUER, Johann, 64293 DARMSTADT (DE); PARUSEL, Manfred, 64293 DARMSTADT (DE)
(74) Vertreter: Weckenbrock, Matthias
(86) Internationale Anmeldenummer: PCT/EP2020/083569
(87) Internationale Veröffentlichungsnummer: WO 2021/105319

(56) Entgegenhaltungen:
- WO-A1-2015/067337
- WO-A1-2018/095834
- DE-A1- 19 647 539

## Beschreibung

Die vorliegende Erfindung bezieht sich auf einen partikulären Füllstoff, welcher auf Trägerpartikeln eine diese jeweils umhüllende Beschichtung aufweist, die ein mit Niob und mindestens einem weiteren Element dotiertes Titandioxid enthält nach Anspruch 1, auf ein Verfahren zur Herstellung eines derartigen partikulären Füllstoffs nach Anspruch 10 sowie auf dessen Verwendung, insbesondere als Varistor-Füllstoff mit nichtlinearen elektrischen Eigenschaften in Beschichtungszusammensetzungen und Formmassen nach Anspruch 13.

Beschichtungszusammensetzungen oder Formmassen, die beispielsweise aus Silikonen, EPDM (Ethylen-Propylen-Dien-Monomer), Polyurethanen, Polyethylenen, Epoxiden, Phenolharzen oder keramischen Werkstoffen bestehen und bestimmte funktionelle Füllstoffe enthalten, werden beispielsweise in verschiedenen Anwendungsformen in der Hochspannungstechnik eingesetzt um die dort auftretenden elektrischen Felder zu kontrollieren. Ziel des Einsatzes dieser funktionellen Füllstoffe ist eine kontrollierte Feldsteuerung oder auch ein Überspannungsschutz im Anwendungsmedium. Die dafür eingesetzten funktionellen Füllstoffe werden auch als Varistoren ("Variable" + "Resistor") bezeichnet. Sie sind dadurch charakterisiert, dass ihre elektrische Leitfähigkeit im Anwendungsmedium von der anliegenden Feldstärke abhängt, also nichtlinear auftritt.

Solche Füllstoffe eignen sich besonders zum Einsatz in Anwendungsmedien und dem Schutz der dort verwendeten Werkstoffe, in denen hohe konstante oder veränderliche Feldstärken auftreten.

Typische Einsatzgebiete sind hier die Feldsteuerung an Hochspannungskabeln, zu deren Verbindung untereinander beispielsweise in Muffen oder auch an Endverschlüssen die Hauptisolation entfernt wird und sich an den Grenzflächen von elektrisch leitfähigen und isolierenden Bauteilen große Feldstärkengradienten aufbauen (electrical stress) oder aber auch für den Überspannungsschutz gegen transiente Belastungen wie Schaltspannungen, Blitzschlag oder Entladungen. Weitere Einsatzgebiete bestehen auch in der Feldsteuerung von Vergussmassen und Kontakten von Schaltungen der Hochleistungselektronik (high power electronics).

Mit Varistormaterialien gefüllte Anwendungsmedien, beispielsweise Polymere, zeigen sowohl Eigenschaften einer resistiven als auch einer kapazitiven Feldsteuerung. Daher eignen sich diese Materialien sowohl für den Einsatz in Gleichspannungsanwendungen als auch in Wechselspannungsanwendungen und können auch transiente Vorgänge (Impulse) abfangen. Die Ursache dafür liegt in einem wohldosierten Spannungsabfall zwischen der Hochspannungsquelle (z.B. einem Kabel) und der Erdung (z.B. Außenleiter) über das mit dem Varistor gefüllte Anwendungsmedium. Auf Grund der nichtlinearen elektrischen Eigenschaften des Varistormaterials (Leitfähigkeit) kommt es zu einer Vergleichmäßigung des elektrischen Feldes (resistive Feldsteuerung) und gleichzeitig wird durch die wegen des Vorhandenseins des Varistormaterials erhöhte Dielektrizitätskonstante des Anwendungsmediums bei einem geringen Verlust (tan δ) die Feldstärkenverteilung verbreitert (kapazitive Feldsteuerung).

Die nichtlinearen elektrischen Eigenschaften von Varistor-Materialien wurden bereits vor einigen Jahrzehnten zum Schutz elektrischer Systeme genutzt, beispielsweise in Form von gesinterten Keramiken, die SiC oder ZnO als Varistormaterialien enthielten und zum Schutz von Telefonsystemen eingesetzt wurden. Auch andere Varistormaterialien, oft in Form unterschiedlich geformter Partikel verschiedener Größen, wurden bereits beschrieben, beispielsweise Partikel aus Titancarbid, Titansuboxid (TiO) oder leitfähige Partikel aus Kupfer oder Carbon Black.

So ist beispielsweise aus WO 97/26693 A1 bekannt, zerkleinerte Zinkoxid-Partikel als Mikrovaristoren in Polymermassen verschiedener Zusammensetzung mit einer Konzentration von 25-50 % einzuarbeiten, um eine Verschiebung zu höheren Schaltfeldstärken im Anwendungsmedium zu bewirken und damit ein elektrisches Versagen unwahrscheinlicher zu machen. Die dabei erzeugten Materialien besitzen jedoch immer noch eine vergleichsweise hohe elektrische Leitfähigkeit.

In EP 2020009 B1 werden Überspannungsschutzmittel für elektronische Bauteile und Schaltungen beschrieben, die monolagig oder kettenförmig in definierter Weise angeordnete Mikrovaristorpartikel aus einer Vielzahl möglicher Materialien wie dotiertem Zinkoxid, Zinnoxid, Siliziumcarbid oder Strontiumtitanat beinhalten.

Aus DE 102010052888 A1 sind Varistorpartikel bekannt, die auf einem plättchenförmigen Substrat wie beispielsweise Glimmer eine leitfähige Schicht aufweisen, die aus einem mit Antimon dotierten Zinnoxid in definierter Zusammensetzung besteht.

In DE 19647539 A1 werden leitfähige Pigmente mit Substraten in Plättchen- oder Nadelform beschrieben, die mit einer leitfähigen Schicht Niob und/oder Tantal dotierten Titandioxid überzogen sind.

In WO 2015067337 A1 werden elektrisch leitfähige Pigmente beschrieben, die aus einem plättchenförmigem Substrat und einer umhüllenden Schicht aus dotiertem Titandioxid bestehen.

In WO 2018095834 A1 wird eine Polymerzusammensetzung beansprucht, die Pigmente mit Niob dotiertem Titandioxid enthalten.

Die im Stand der Technik verwendeten Varistormaterialien weisen verschiedene Nachteile auf. So sind beispielsweise Mikropartikel aus SiC extrem hart, was eine Zerkleinerung des Materials erschwert und zu einer hohen Abrasivität der Partikel im Anwendungsmedium und im Verarbeitungsprozess führt. Außerdem neigen mikronisierte SiC-Partikel zur Oxidation ihrer Oberfläche, was deren elektrische Eigenschaften negativ beeinflusst.

Zinkoxid weist eine außerordentlich hohe Dichte von 5,5 bis 6,5 g/cm³ auf, je nach dem Grad der durch den Sinterprozess erzielten Verdichtung. Da die Dichte der Varistorpartikel deutlich größer ist als die Dichte des Anwendungsmediums, neigen diese Varistorpartikel bereits während der Präparation der Gemische mit dem Anwendungsmedium stark zum Absetzen, was eine homogene und dauerhafte Durchmischung der Materialien erschwert. Die unregelmäßige Zusammensetzung des Anwendungsmediums führt entsprechend zu Unregelmäßigkeiten in dessen elektrischen Eigenschaften.

Insgesamt besteht daher weiterhin ein Bedarf an Füllstoffen mit Varistoreigenschaften, die ausgeprägte nichtlineare elektrische Eigenschaften und positive Stoffeigenschaften zeigen und sich mechanisch leicht und homogen in verschiedene Anwendungsmedien einbringen lassen, ohne darin ein Absetzverhalten aufzuweisen.

Die Aufgabe der vorliegenden Erfindung besteht daher darin, einen Füllstoff mit Varistoreigenschaften zur Verfügung zu stellen, der sich leicht und in stabiler Mischung in verschiedenste Anwendungsmedien einbringen lässt, in seiner Zusammensetzung derart gesteuert werden kann, dass er optimal an die jeweiligen Erfordernisse des Anwendungsmediums angepasst werden kann, ein verlässliches nichtlineares elektrisches Verhalten zeigt und sowohl in Gleichstromanwendungen als auch in Wechselstromanwendungen einsetzbar ist.

Eine weitere Aufgabe der Erfindung besteht darin, ein Verfahren zur Herstellung eines derartigen Füllstoffs zur Verfügung zu stellen.

Darüber hinaus besteht eine zusätzliche Aufgabe der Erfindung darin, die Verwendung eines derartigen Füllstoffs aufzuzeigen.

Die Aufgabe der vorliegenden Erfindung wird gelöst durch einen partikulären Füllstoff, welcher aus Trägerpartikeln und einer die Trägerpartikel jeweils umhüllenden Beschichtung besteht, wobei die Trägerpartikel mindestens eine Aluminiumverbindung oder Siliziumverbindung enthalten oder jeweils aus dieser bestehen und die Beschichtung ein mit Niob und mindestens einem weiteren Element dotiertes Titandioxid enthält, dadurch gekennzeichnet, dass das Titandioxid neben Niob mit mindestens einem weiteren Element, ausgewählt aus der Gruppe bestehend aus Mn, Cr und Ce, dotiert ist.

Die Aufgabe der Erfindung wird ebenfalls durch ein Verfahren gelöst nach Anspruch 10, bei dem Trägerpartikel, die mindestens eine Aluminiumverbindung oder Siliziumverbindung enthalten oder jeweils aus dieser bestehen, in wässriger Suspension bei einem jeweils geeigneten pH-Wert mit einer Beschichtung versehen werden, die mindestens eine Titanverbindung, mindestens eine Niobverbindung und mindestens eine Verbindung eines weiteren Elementes enthält, und wobei die mit der Beschichtung versehenen Trägerpartikel anschließend getrocknet und geglüht werden, wobei die Beschichtung in ein mit Niob und mindestens einem anderen Element dotiertes Titandioxid in granulärer Form überführt wird.

Außerdem wird die Aufgabe der Erfindung auch durch die Verwendung eines derartigen partikulären Füllstoffs zur Pigmentierung von Beschichtungszusammensetzungen und Formmassen gelöst, wobei den so erzeugten Beschichtungszusammensetzungen und Formmassen nichtlineare elektrische Eigenschaften verliehen werden.

Gegenstand der vorliegenden Erfindung ist daher ein partikulärer Füllstoff nach Anspruch 1, der auf bestimmten Trägerpartikeln eine Beschichtung aufweist, die ein elektrisch halbleitfähiges oder elektrisch leitfähiges Verhalten des Füllstoffs im Anwendungsmedium hervorruft. Es hat sich als vorteilhaft herausgestellt, Füllstoffe mit gewünschten Varistoreigenschaften aus Materialien verschiedener Zusammensetzung herzustellen. Bei einer derartigen Herangehensweise sind Materialeigenschaften wie Härte, Dichte, Größe, Form und letztendlich halbleitende oder leitfähige Eigenschaften der Varistorfüllstoffe besser kontrollierbar und oft auch gezielter einstellbar, als es bei homogen zusammengesetzten partikulären Füllstoffen der Fall sein könnte.

So haben sich als Materialien für die Trägerpartikel der erfindungsgemäßen Füllstoffe solche als vorteilhaft herausgestellt, die mindestens eine Aluminiumverbindung oder Siliziumverbindung enthalten oder jeweils daraus bestehen. Als besonders geeignete Aluminiumverbindungen kommen dabei Aluminiumoxid (Al₂O₃) oder natürliche und synthetische Alumosilikate verschiedener Zusammensetzung in Betracht. Eine besonders geeignete Siliziumverbindung stellt Siliziumdioxid (SiO₂) dar, welches in kristalliner und besonders bevorzugt in amorpher Form, beispielsweise als Kieselgur, eingesetzt werden kann.

Materialien, die aus Alumosilikaten bestehen oder solche enthalten sind beispielsweise Mullit, Flugasche, Kaolinit, Bimsstein oder Perlit. Alle diese Materialien sind als Trägermaterial für die partikulären Füllstoffe der vorliegenden Erfindung sehr gut geeignet, weil sie wegen ihrer natürlichen Zusammensetzung beziehungsweise wegen besonderer Verarbeitungsprozesse eine sehr geringe Dichte und eine vorteilhafte Größe und Form aufweisen und sich gut beschichten lassen. Zum Teil sind sie als Naturmaterialien oder Abfallprodukte großtechnischer Prozesse gut und kostengünstig verfügbar.

Besonders bevorzugt können Mullit und Flugasche eingesetzt werden.

Die Trägerpartikel für die erfindungsgemäßen partikulären Füllstoffe können verschiedene Formen aufweisen. Im Hinblick auf die späteren Anwendungsmedien und deren spezielle Anforderungen eignen sich insbesondere plättchenförmige oder kugelförmige Trägerpartikel, oder aber auch Trägerpartikel, die eine isotrop unregelmäßige Form aufweisen. Unter kugelförmigen Trägerpartikeln sind solche zu verstehen, die in Form einer Vollkugel, in Form einer Hohlkugel oder in Form eines kugelartigen Gebildes vorliegen, das keine perfekt geometrische Kugelform aufweist und als Vollkörper aber auch als Hohlkörper ausgebildet sein kann. Es liegt in der Natur der vorab erwähnten Materialien, dass sich geometrisch perfekte Kugeln nur in seltensten Fällen erzeugen lassen, kugelartige Formen also aus technischen Gründen überwiegen.

Als isotrop unregelmäßig werden erfindungsgemäß alle körnigen Partikel bezeichnet, bei denen sich optisch keine Vorzugsachse feststellen lässt, die aber einen in alle Raumrichtungen annähernd gleichen bzw. ähnlichen Durchmesser aufweisen und Seitenflächen aufweisen können. Solche Partikel werden auch allgemein als Granulate bezeichnet.

Plättchenförmige Trägerpartikel liegen erfindungsgemäß vorteilhaft als Aluminiumoxidplättchen vor, die entweder aus reinem Aluminiumoxid (Al₂O₃) bestehen oder neben Aluminiumoxid Fremdanteile von weiteren Metalloxiden zu einem Anteil von 0,1 bis zu 10 Gew.%, vorzugsweise von 0,1 bis zu 5 Gew.%, bezogen auf das Gewicht der Trägerpartikel, enthalten. Dabei handelt es sich um die Oxide oder Oxidhydrate von Ti, Sn, Si, Ce, Ca, Zn, In und/oder Mg. Bevorzugt werden Al₂O₃-Trägerpartikel eingesetzt, die neben Al₂O₃ noch von 0,1 bis 5 Gew.%, bezogen auf das Gewicht der Trägerpartikel, an TiO₂ enthalten.

Solche plättchenförmigen Al₂O₃-Trägerpartikel können beispielsweise gemäß dem in EP 763 573 A2 offenbarten Verfahren erhalten werden. Es sind auch entsprechende Produkte in geeigneten Partikelgrößen kommerziell verfügbar.

Plättchenförmige Trägerpartikel eignen sich insbesondere als Ausgangsstoffe für solche partikulären Füllstoffe gemäß der Erfindung, die in dünnen Schichten auf Untergründen oder in dünnwandigen Bauteilen eingesetzt werden sollen, beispielsweise in Harz- oder Lackschichten auf Isolatoren, Durchführungen, elektrischen Leitern oder auf Einbauten in elektrischen Maschinen wie Transformatoren, Generatoren und Motoren. Da die partikulären Füllstoffe die Plättchenform der Ausgangsträgerpartikel beibehalten, können sie sich in den dünnen Schichten solcher Anwendungen gut lateral ausrichten und so bei Bedarf die nötigen Leitpfade ausbilden.

Bei den aus Alumosilikaten (allgemeine Formel AlₓSi_{y}O_{z}; x, y und z variabel) bestehenden oder diese enthaltenden Trägerpartikeln handelt es sich insbesondere um die vorab genannten Materialien, die natürliche Abbauprodukte darstellen oder als Abfallprodukte großtechnischer Prozesse in großem Umfang kostengünstig zur Verfügung stehen oder synthetisch hergestellt werden. Entsprechende Produkte werden bereits als Zuschlagstoffe, beispielsweise in der Bauindustrie, eingesetzt. Besonders bevorzugt werden Flugasche und Mullit als Ausgangsmaterialien für die Trägerpartikel der Füllstoffe gemäß der vorliegenden Erfindung verwendet, da diese bereits in der gewünschten Form, häufig und bevorzugt als kugelartiger Hohlkörper, und in der gewünschten Partikelgröße zur Verfügung stehen. Alle anderen genannten Materialien können bei Bedarf durch übliche Mahlprozesse auf die erforderliche Partikelgröße gebracht werden.

Auch amorphe Siliziumdioxidpartikel sind, beispielsweise als Kieselgur, großtechnisch verfügbar.

Auch die (regelmäßige oder unregelmäßige) isotrope Form der hier genannten Materialien überträgt sich auf die Form der daraus erzeugten partikulären Füllstoffe. Letztere finden vorzugsweise Einsatz in Formmassen, die in voluminöser Form eingesetzt werden, beispielsweise zur Erzeugung von Kabelmuffen, Isolatoren, Durchführungen oder Kabelendverschlüssen. Diese Produkte werden häufig im Spritzgussverfahren hergestellt, teilweise direkt am Ort der Anwendung. Es ist daher von großer Bedeutung, dass die dabei eingesetzten Volumenpolymere (Silikone, Epoxide, Polyethylene, Polyurethane, EPDM, etc.) trotz des Zusatzes der partikulären Füllstoffe über geeignete rheologische Eigenschaften zur Durchführung des Spritzgussverfahrens verfügen. Plättchenförmige Partikel können hier das Fließverhalten der Spritzgussmasse nachteilig beeinflussen, sodass für solche Einsatzgebiete isotrope Partikel bevorzugt werden, die das Fließverhalten der pigmentierten Volumenpolymeren nicht oder nur in geringem Maße nachteilig beeinflussen. Darüber hinaus wirkt sich die teilweise sehr geringe Dichte dieser Trägermaterialien besonders vorteilhaft auf die Absetzneigung der partikulären Füllstoffe im Anwendungsmedium aus.

Die Dichte der partikulären Füllstoffe gemäß der vorliegenden Erfindung liegt im Bereich von 1,5 bis 4,5 g/cm³, vorzugsweise im Bereich von 1,5 bis 3,0 g/cm³ und insbesondere im Bereich von 1,5 bis 2,5 g/cm³. Sie setzt sich zusammen aus dem Mittelwert der Dichten von Trägerpartikel und Beschichtung und kann durch die entsprechende Materialwahl insbesondere der Trägerpartikel jeweils an die Erfordernisse im Anwendungsmedium angepasst werden.

Die Trägerpartikel des erfindungsgemäßen partikulären Füllstoffs werden jeweils von einer Beschichtung umhüllt, die ein dotiertes Titandioxid enthält, welches mit Niob und mindestens einem weiteren Element, ausgewählt aus der Gruppe bestehend aus Mn, Cr und Ce, dotiert ist. Dabei umhüllt die Beschichtung jeden Trägerpartikel einzeln und liegt separat auf diesem vor, bildet also keine zusammenhängende Phase um mehrere Trägerpartikel.

Bei dem weiteren Element handelt es sich erfindungsgemäß um mindestens ein Element, ausgewählt aus der Gruppe bestehend aus Mn, Cr und Ce.

Die Dotierung erfolgt vorzugsweise in den Kombinationen:
Nb, Mn;
Nb, Mn, Cr;
Nb, Mn, Ce;
Nb, Cr;
Nb, Cr, Ce
Nb, Ce; oder
Nb, Mn, Cr, Ce,
wobei die Kombinationen Nb, Mn, Ce und Nb, Cr besonders bevorzugt sind. Die Dotierelemente liegen in kationischer Form im TiO₂-Kristallgitter oder an den Korngrenzen der Titandioxidgranulen vor.

Die Dotierung im Titandioxid ist jeweils in einer Menge von 0,01 bis 5 Atom-% vorhanden, bezogen auf die Anzahl der Summe aus Ti-Atomen und Atomen der Dotierelemente. Vorzugsweise liegt der Anteil der Dotierelemente (Gesamtheit der Dotierelemente) bei einem Gehalt von 0,02 bis 2 Atom-%.

Während Niob die elektrische Leitfähigkeit des Füllstoffs im Anwendungsmedium und Mangan beziehungsweise Chrom die Steilheit des nichtlinearen Charakters der Leitfähigkeit bestimmen, kann eine zusätzliche Dotierung mit Cer dazu führen, dass eine nicht linear elektrische Leitfähigkeit im Anwendungsmedium zu höheren Feldstärken verschoben wird.

Vorzugsweise besteht die Beschichtung auf den Trägerpartikeln des erfindungsgemäßen Füllstoffs aus dem mehrfach dotierten Titandioxid, welches in Form von Granulen auf der Oberfläche der Trägerpartikel vorliegt und dort eine weitestgehend geschlossene, granuläre Schicht bildet.

Die Beschichtung auf dem Trägerpartikel weist jeweils eine geometrische Dicke im Bereich von 100 bis 5000 nm, vorzugsweise von 150 bis 4000 nm und insbesondere von 200 bis 2000 nm auf. Die geometrische Schichtdicke de Beschichtung lässt sich anhand von Schnittbildern (Ar-Ionenstrahl) von Einzelpartikeln des partikulären Füllstoffs leicht mittels üblicher Messmethoden ermitteln.

Die mittlere Partikelgröße d₅₀ des erfindungsgemäßen partikulären Füllstoffs liegt im Bereich von 1 bis 150 µm, vorzugsweise von 2 bis 100 µm und insbesondere von 5-50 µm. Bedingt durch die Herkunft der vorab genannten Trägermaterialien isotroper Form können die Partikelgrößen der einzelnen Füllstoffpartikel in einem vergleichsweise breiten Bereich schwanken, sodass hier oft nur die Angabe der volumenbezogenen mittleren Partikelgröße d₅₀ sinnvoll erscheint. Auch beim Einsatz plättchenförmiger Trägerpartikel liegt in der Regel eine gewisse Schwankungsbreite der Partikelgröße der Einzelpartikel vor.

Die Partikelgröße des partikulären Füllstoffs sowie ggf. der Trägerpartikel wird vorzugsweise über eine Laserdiffraktionsmethode bestimmt, die allgemein geläufig ist und den Vorteil hat, auch die Partikelgrößenverteilung der Partikel bestimmen zu können. Für die erfindungsgemäßen Füllstoffe und deren Trägerpartikel sind die Partikelgrößen mit einem Malvern Mastersizer 3000, APA 300 (Produkt der Firma Malvern Instruments, Ltd., UK) bestimmt worden.

Gegenstand der vorliegenden Erfindung ist auch ein Verfahren zur Herstellung eines partikulären Füllstoffs wie oben beschrieben, wobei Trägerpartikel, die mindestens eine Aluminiumverbindung oder Siliziumverbindung enthalten oder jeweils aus dieser bestehen, in wässriger Suspension bei einem jeweils geeigneten pH-Wert mit einer Beschichtung versehen werden, die mindestens eine Titanverbindung, mindestens eine Niobverbindung und mindestens eine Verbindung eines weiteren Elementes, ausgewählt aus der Gruppe bestehend aus Mn, Cr und Ce, enthält.

In der Regel handelt es sich bei den Verbindungen des Niobs und der anderen Dotierelemente, ausgewählt aus der Gruppe bestehend aus Mn, Cr und Ce, um wasserlösliche oder säurelösliche Verbindungen, die in dieser gelösten Form und in entsprechend des Dotiergrades gewählter Menge im Beschichtungsverfahren eingesetzt werden. Dabei ist zu beachten, dass zur Ausfällung der Oxidhydrate der entsprechenden Elemente auf der Oberfläche der Trägerpartikel unter Umständen das aufeinander folgende Einstellen mehrerer verschiedener pH-Werte nötig ist. Übliche pH-Werte liegen im sauren bis neutralen Bereich bei pH 2 bis pH 7. Sind alle Vorläuferverbindungen auf der Oberfläche der Trägerpartikel in einer Beschichtung abgeschieden, werden die beschichteten Trägerpartikel anschließend getrocknet und geglüht. Beim Glühen bei Temperaturen im Bereich von 850 bis 1300 °C entstehen auf der Oberfläche der Trägerpartikel feine Granulate aus mit Niob und mindestens einem weiteren Element, ausgewählt aus der Gruppe bestehend aus Mn, Cr und Ce, dotierten Titandioxid.

Entsprechend den vorab bereits beschriebenen Details sind die im erfindungsgemäßen Verfahren eingesetzten Trägerpartikel vorzugsweise plättchenförmig, kugelförmig oder isotrop unregelmäßig geformt und enthalten Aluminiumoxid, Siliziumdioxid oder ein Alumosilikat oder bestehen jeweils daraus.

Vorzugsweise bestehen die eingesetzten Trägerpartikel aus Aluminiumoxid, Siliziumdioxid, Mullit, Flugasche, Kaolinit, Bimsstein oder Perlit, und ganz besonders bevorzugt aus Mullit oder Flugasche.

Letztere weisen eine isotrope Partikelform und, bedingt durch das zumindest teilweise Vorliegen von isotropen Hohlkörpern, eine vorteilhaft geringe Dichte auf, die zur Anwendung der daraus erzeugten Füllstoffe vor allem in Volumenpolymeren prädestiniert. Die geringe Dichte dieser Trägermaterialien von < 2 g/cm³ ermöglicht eine besonders gute Anpassung der Gesamtdichte der erfindungsgemäßen partikulären Füllstoffe an die Dichte des polymeren Anwendungsmediums, sodass ein Entmischen des Komposits während der Topfzeit oder während des Vernetzens im Anwendungsfall vermieden werden kann. Dadurch kann eine Sedimentation des Füllstoffs mit den daraus folgenden Nachteilen wie Gradientenbildung im Anwendungsmedium und nachfolgend ungleichmäßige elektrische Eigenschaften des resultierenden Werkstücks einfach vermieden werden, was bei Füllstoffen höherer Dichte nur mit übermäßigem apparativen Aufwand gelingt.

Einzelheiten zu den Dotierelementen und deren vorteilhaften Kombinationen sind vorab bereits beschrieben worden. Insoweit wird hier darauf Bezug genommen. Die trifft ebenso auf alle Details hinsichtlich Form, Größe und Dichte der Trägerpartikel sowie geometrische Dicke und Zusammensetzung der Beschichtung zu.

Gegenstand der vorliegenden Erfindung ist auch die Verwendung eines partikulären Füllstoffs gemäß der vorstehenden Beschreibung zur Pigmentierung von Beschichtungszusammensetzungen und Formmassen, insbesondere mit der Zielstellung, diesen Beschichtungszusammensetzungen und Formmassen nichtlineare elektrische Eigenschaften zu verleihen, also als Varistor-Füllstoff zu wirken.

Die entsprechenden ungefüllten Beschichtungszusammensetzungen oder Formmassen enthalten in der Regel Silikone, EPDM, Polyurethane, Polyethylene, Epoxide, Phenolharze oder einen Keramikwerkstoff als Hauptbestandteil oder bestehen daraus.

Je nach Anwendungsmedium und erforderlichen elektrischen Eigenschaften liegt der erfindungsgemäße partikuläre Füllstoff in der Beschichtungszusammensetzung oder Formmasse mit einer Pigmentvolumenkonzentration im Bereich von 3-33 Vol.%, vorzugsweise 3-25 Vol.-% und insbesondere 4-20 Vol.% vor, bezogen auf das (Festkörper)volumen der Beschichtungszusammensetzung oder Formmasse.

Obwohl die Bestimmung des Masseanteils eines Füllstoffs in einem Anwendungsmedium (Pigmentmassekonzentration PMK) leicht durchführbar ist, wird zur besseren Vergleichbarkeit verschiedener Systeme in der Praxis häufig die Pigmentvolumenkonzentration PVK bestimmt. Da die Füllstoffe unterschiedliche Dichten aufweisen, nehmen sie im Anwendungsmedium bei gleicher Einwaage verschiedene Volumina ein. Insbesondere bei den hier beschriebenen perkolierenden Partikelsystemen bestimmen Partikel-Partikel-Kontakte, Partikelgrößen und deren Größenverteilung sowie Partikelgeometrien die elektrischen Eigenschaften der resultierenden Kompositmaterialien wesentlich. Die Wirkung eines spezifischen Varistor-Füllstoffes wird daher durch den Vergleich von Pigmentvolumenkonzentrationen am besten beschrieben.

Pigmentmassekonzentration PMK und Pigmentvolumenkonzentration PVK sind wie folgt definiert (die flüchtigen Anteile werden in beiden Fällen nicht ausgewiesen): $PMK = \frac{m \left(Füllstoff\right)}{m \left(Füllstoff\right) + m \left(Bindemittel\right)}$ $\begin{matrix}PVK = \frac{V \left(Füllstoff\right)}{V \left(Füllstoff\right) + V \left(Bindemittel\right)} \\ = \frac{m \left(Füllstoff\right) / d \left(Füllstoff\right)}{\left(m\left(Füllstoff\right)/d\left(Füllstoff\right)\right) + \left(m\left(Bindemittel\right)/d\left(Bindemittel\right)\right)}\end{matrix}$ m= Masse, d=Dichte, V=Volumen

Die partikulären Füllstoffe gemäß der vorliegenden Erfindung weisen in der Beschichtungszusammensetzung oder Formmasse des Anwendungsmediums nichtlineare elektrische Eigenschaften, d.h. Varistoreigenschaften, auf. Bedingt durch die Auswahlmöglichkeiten verschiedener Trägerpartikel, die neben verschiedener Form und Größe auch unterschiedliche Dichten aufweisen können, und bedingt durch die Variationsmöglichkeiten in Art und Menge der Dotierung der Beschichtung auf den jeweiligen Trägerpartikeln lassen sich sowohl die elektrischen Eigenschaften als auch die Dichte der partikulären Füllstoffe optimal an die jeweiligen Erfordernisse des Anwendungsmediums anpassen. Dabei sind alle Ausgangsstoffe gut verfügbar und die Herstellung der partikulären Füllstoffe mittels eines unkomplizierten Beschichtungsverfahrens ist ohne großen technischen Aufwand durchführbar. Die erfindungsgemäßen partikulären Füllstoffe lassen sich in Gleichstrom- und in Wechselstromanwendungen einsetzen und erreichen hohe Schaltfeldstärken von > 3000 kV/m. Im Grundzustand entspricht die elektrische Leitfähigkeit der erfindungsgemäßen partikulären Füllstoffe weitestgehend der elektrischen Leitfähigkeit der sie umgebenden Isolationsmaterialien, sodass mit der unbeabsichtigten Erzeugung einer elektrischen Leitfähigkeit unter Nicht-Stress-Bedingungen nicht gerechnet werden muss. Beim Durchschalten im Stress-Fall ist dagegen eine Änderung der gemessenen Stromdichte in der Beschichtungszusammensetzung oder Formmasse über mehrere Größenordnungen möglich.

Die erhöhte Stromdichte steht dabei für die geänderte nicht lineare Leitfähigkeit des Komposits.
**Figur 1****:** zeigt die schematische Schaltung der Messanordnung (1b, unten) mit Spannungsquelle (DC), integrierter Spannungsmessung (U), Pico-Amperemeter (A) sowie Prüfkörper, sowie den Prüfkörper mit den relevanten Masszahlen (1a, oben).
**Figur 2****:** zeigt die charakteristische DC Feldstärke-Stromdichte-Kurve (E/J) eines Füllstoffs gemäß Beispiel 1 in RTV-2 Silikon mit Pigmentmassekonzentrationen von 15, 20, 25 und 30%. Die Perkolationsschwelle ist markiert (Beispiele 5-1 bis 5-4).
**Figur 3****:** zeigt die charakteristische DC Feldstärke-Stromdichte-Kurve (E/J) des Füllstoffs gemäß Beispiel 2 in den Pigmentmassekonzentrationen 25 und 50,8% in RTV-2 Silikon (Beispiele 5-6 und 5-7).
**Figur 4****:** zeigt die charakteristische DC Feldstärke-Stromdichte-Kurve (E/J) des Füllstoffs gemäß Beispiel 3 in den Pigmentmassekonzentrationen 25 und 37% in RTV-2 Silikon (Beispiele 5-8 und 5-9).
**Figur 5****:** zeigt die charakteristische DC Feldstärke-Stromdichte-Kurve (E/J) eines Füllstoffs gemäß Beispiel 4 in RTV-2 Silikon mit Pigmentmassekonzentrationen von 15, 20, 25, 30 und 35%. Die Perkolationsschwelle liegt zwischen 15 und 30% PMK (Beispiele 5-10 bis 5-14).
**Figur 6****:** zeigt die Perkolationskurven der Füllstoffe gemäß den Beispielen 1 und 4 in RTV-2 Silikon in Abhängigkeit von der Pigmentvolumenkonzentration PVK. Aufgetragen ist die spezifische Leitfähigkeit der Proben bei einer Feldstärke von 20 kV/m.
**Figur 7****:** zeigt die charakteristische DC Feldstärke-Stromdichte-Kurve (E/J) des Füllstoffs gemäß Beispiel 1 in den Pigmentmassekonzentrationen 25 und 35% in LSR Silikon (Beispiele 6-1 und 6-2).
**Figur 8****:** zeigt die charakteristische DC Feldstärke-Stromdichte-Kurve (E/J) des Füllstoffs gemäß Beispiel 4 in den Pigmentmassekonzentrationen 20 und 35% in Epoxid (Beispiele 7-1 und 7-2).
**Figur 9****:** zeigt die charakteristische DC Feldstärke-Stromdichte-Kurve (E/J) des Füllstoffs gemäß Beispiel 1 in HD-PE in den Konzentrationen 30 und 40 Gew.% (Beispiele 8-1 und 8-2).
**Figur 10****:** zeigt die charakteristische DC Feldstärke-Stromdichte-Kurve (E/J) der Prüfkörper gemäß den Beispielen 5-10 bis 5-18 (Tabelle 3) in RTV-2 Silikon. Die Prüfkörper 5-10, 5-15 und 5-17 weisen eine PMK von 25% auf, die Prüfkörper %-14, 5-16 und 5-18 eine PVK von ca. 27%.
**Figur 11****:** zeigt die Änderung der Impedanz Z, der Permittivität ε' und des Verlustfaktors tan δ (x 100) bei 50 Hz Wechselspannung vom Füllstoff gemäß Beispiel 1 in HDPE mit verschiedenen Füllstoff-Konzentrationen (0 bis 40 Masse-%).

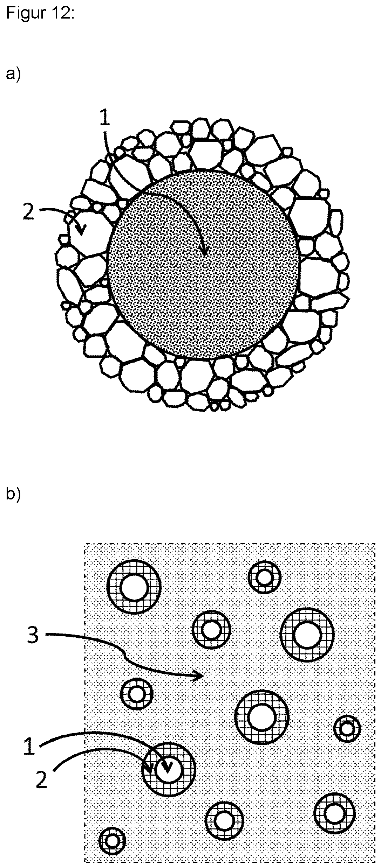

**Figur 12****:** zeigt a) eine schematische Darstellung der partikulären Füllstoffe gemäß der vorliegenden Erfindung mit dielektrischem Trägerpartikel (1) und einer granulären, nichtlinear elektrisch leitfähigen Beschichtung (2) und b) eine schematische Darstellung einer mit den erfindungsgemäßen Füllstoffen gefüllten Polymermatrix (3).

Die Erfindung soll nachfolgend anhand von Beispielen beschrieben werden, jedoch nicht auf diese beschränkt sein.

### Beispiele:

### Herstellung von partikulären Füllstoffen:

### Beispiel 1:

100 g Aluminiumoxid Flakes (BET 3,3 m²/g, Dichte 3,75g/cm³, Partikelgröße 5-40 µm) werden in ca. 2L VE-Wasser suspendiert. Im Sauren wird die Suspension bei 75°C unter Rühren mit einer Lösung aus 700 g Titanoxychlorid (400 g/l), 3,3 g Niobpentachlorid in 24 ml Salzsäure (37%) und 0,8 g Mangansulfat Monohydrat tropfenweise versetzt. Durch gleichzeitige geregelte Zudosierung von Natronlauge wird der pH-Wert von 2 konstant gehalten. Nach Zugabe der Gesamtmenge der Lösung wird noch 15 min bei 75°C nachgerührt, bevor eine Lösung aus 13,5 g Cerchlorid Heptahydrat in 150 ml VE-Wasser gleichmäßig und unter Zudosierung von Natronlauge bei einem konstanten pH-Wert von 7 zugegeben wird. Anschließend wird unter Rühren auf Raumtemperatur abgekühlt und die Reaktionsmischung noch einmal neutralisiert. Das erhaltene Pigment wird über eine Nutsche abfiltriert, mit Wasser gewaschen, bei 140°C getrocknet und 120 min. bei 1100°C geglüht. Man erhält ein helles, ockerfarbenes Pigmentpulver. Die erhaltenen Pigmentpartikel weisen Aluminiumoxid-Plättchen (Teilchengröße < 15 µm) als Trägerpartikel und eine darauf haftfest aufgefällte Beschichtung aus mit Niob, Mangan und Cer dotiertem Titandioxid auf.

### Beispiel 2:

100 g sphärische Aluminiumoxid Partikel (BET 1,4 m²/g, Dichte 2,85 g/cm³, Partikelgröße d₅-d₉₅ =14 µm - 45 µm) werden in ca. 2L VE-Wasser suspendiert. Im Sauren wird die Suspension bei 90°C unter Rühren mit einer Lösung aus 577 g Titanoxychlorid (400 g/l), 5,04 g Niobpentachlorid in 24 ml Salzsäure (37%) und 0,16 g Mangansulfat Monohydrat tropfenweise versetzt. Durch gleichzeitiges geregelte Zudosieren von Natronlauge wird der pH-Wert von 2 konstant gehalten. Nach Zugabe der Gesamtmenge der Lösung wird noch 15 min bei 90 °C nachgerührt, bevor eine Lösung aus 7,6 g Cerchlorid Heptahydrat in 150 ml VE-Wasser gleichmäßig und unter Zudosieren von Natronlauge bei einem konstanten pH-Wert von 7 zugegeben wird. Anschließend wird unter Rühren auf Raumtemperatur abgekühlt und die Reaktionsmischung noch einmal neutralisiert. Das erhaltene Pigment wird über eine Nutsche abfiltriert, mit Wasser gewaschen, bei 140°C getrocknet und 120 min. bei 1100°C geglüht. Man erhält ein ockerfarbenes Pigmentpulver. Die erhaltenen Pigmentpartikel weisen Aluminiumoxid-Hohlkugeln (Teilchengröße < 70 µm) als Trägerpartikel und eine darauf haftfest aufgefällte Beschichtung aus mit Niob, Mangan und Cer dotiertem Titandioxid auf.

### Beispiel 3:

100 g sphärische Alumosilikat Partikel (BET 1,4 m²/g Dichte 0,87 g/cm³, Partikelgröße d₅-d₉₅ = 5 µm - 63 µm ) werden in ca. 2L VE-Wasser suspendiert. Im Sauren wird die Suspension bei 90°C unter Rühren mit einer Lösung aus 577 g Titanoxychlorid (400 g/l), 5,04 g Niobpentachlorid in 24 ml Salzsäure (37%) und 0,16 g Mangansulfat Monohydrat tropfenweise versetzt. Durch gleichzeitiges geregelte Zudosieren von Natronlauge wird der pH-Wert von 2 konstant gehalten. Nach Zugabe der Gesamtmenge der Lösung wird noch 15 min bei 90 °C nachgerührt, bevor eine Lösung aus 7,6 g Cerchlorid Heptahydrat in 150 ml VE-Wasser gleichmäßig und unter Zudosieren von Natronlauge bei einem konstanten pH-Wert von 7 zugegeben wird. Anschließend wird unter Rühren auf Raumtemperatur abgekühlt und die Reaktionsmischung noch einmal neutralisiert. Das erhaltene Pigment wird über eine Nutsche abfiltriert, mit Wasser gewaschen, bei 140°C getrocknet und 120 min. bei 1100°C geglüht. Man erhält ein ockerfarbenes Pigmentpulver. Die erhaltenen Pigmentpartikel weisen Alumosilikat-Hohlkugeln (Teilchengröße <100 µm) als Trägerpartikel und eine darauf haftfest aufgefällte Beschichtung aus mit Niob, Mangan und Cer dotiertem Titandioxid auf.

### Beispiel 4:

Die Herstellung des Füllstoffes erfolgt analog Beispiel 3 mit der Änderung, dass in 598 g Titanoxychloridlösung neben 2,5 g Niobpentachlorid (als Lösung 12,5% in HCl) lediglich noch 0,35g Chromtrichlorid zugesetzt wird. Man erhält ein nahezu weißes Pigmentpulver. Die erhaltenen Pigmentpartikel weisen Alumosilikat-Hohlkugeln (Teilchengröße <100 µm) als Trägerpartikel und eine darauf haftfest aufgefällte Beschichtung aus mit Niob und Chrom dotiertem Titandioxid auf.

Tabelle 1 stellt die Zusammensetzung der erfindungsgemäßen partikulären Füllstoffe gemäß den Beispielen 1 bis 4 dar. Die Dotierung der TiO₂-Beschichtung ist in Atom-% im Titandioxid angegeben.

**Tabelle 1:**

| Beispiel | Träger | Gew% Träger | Gew% TiO₂ | At% Nb | At% Mn | At% Cr | At% Ce |
|---|---|---|---|---|---|---|---|
| 1 | Al2O3- Plättchen | 50 | 50 | 0,5 | 0,05 | - | 1,2 |
| 2 | Al2O3-Hohlkugeln | 44 | 56 | 1 | 0,05 | - | 1,1 |
| 3 | Alumosilikat-Hohlkugeln | 40 | 60 | 1 | 0,05 | - | 1,1 |
| 4 | Alumosilikat-Hohlkugeln | 40 | 60 | 0,05 | - | 0,05 | - |

Tabelle 2 zeigt die Dichte und die Größenverteilung der partikulären Füllstoffe gemäß den Beispielen 1 bis 4.

**Tabelle 2:**

| Beispiel | Dichte [g/cm³] | ds [µm] | d₅₀ [µm] | d₉₀ [µm] |
|---|---|---|---|---|
| 1 | 3,94 | 7,9 | 18,5 | 32,5 |
| 2 | 2,87 | 2,4 | 6,6 | 59,9 |
| 3 | 1,61 | 7,6 | 30,8 | 54,2 |
| 4 | 1,50 | 7,1 | 30,7 | 53,3 |

### Beispiel 5:

### Herstellung von Prüfkörpern aus Raumtemperatur-vernetzendem Silikon

Die in Tabelle 3 angegebenen Mengen an Kern-Schale-Partikeln aus den Beispielen 1 bis 4 und den Vergleichsmaterialien α-SiC (Alfa Aesar Art.# 40155, Dichte 3,51 g/cm³) und dem ZnO-Mikrovaristor Pulver (ABB / Schweiz, Dichte 5,22 g/cm³) werden in einer Dose mit den jeweiligen Anteilen der Komponente A eines kommerziellen Raumtemperatur-vernetzendem Silikonharzes RTV-2 (Materialdaten des Herstellers: A:B = 9:1, Viskosität der Mischung 3500 mPa*s bei 23°C, Shore A Härte 45°) grob vorgemischt und in einem Vakuumspeedmixer (Fa. Hauschild) bei auf 4 mbar reduziertem Druck und 1600 Umdrehungen pro Minute mindestens 2 Minuten lang homogenisiert. Im Anschluss werden die jeweiligen Mengen der Komponente B desselben RTV2 Silikonharzes hinzugefügt, die Komponenten wieder grob vorgemischt und mindestens 1 Minute bei 4 mbar und 1600 Umdrehungen pro Minute im Vakuumspeedmixer homogenisiert. Jetzt wird die viskose Masse zügig, unter Einhaltung der Topfzeit, in eine Form vergossen, die die geometrischen Abmessungen des Prüfkörpers vorgibt. Das Silikonharz wird in der Form für mindestens 30 Minuten bei 70°C ausgehärtet. Nach Abkühlen der Form wird die Form geöffnet und der Prüfkörper entnommen und staubfrei gelagert. Die Schichtdicken der vernetzten Prüfkörper liegen zwischen 500 µm und 600 µm und werden für jeden der kreisförmigen Prüfkörper (Durchmesser 60 mm) als Mittelwert von zehn Messungen mit einem Wirbelstrom-Schichtdickenmessgerät (Fischer Dualscope FMP30 mit FD10 Sensor gemäß Din EN ISO 2360) an verschiedenen Stellen ermittelt. Die Prüfkörper für die Beispiele 5-17 und 5-18 sind auch in kleinen Mengen nur schwierig herstellbar, da während der Präparation schon eine Sedimentation in der Speedmixer-Dose einsetzt, die zu ungleichmäßigen Verteilungen der Füllstoffe im Prüfkörper führt.

**Tabelle 3: Prüfkörper aus RTV-2 Silikon:**

| Beispiel | Füllstoff aus Beispiel | Füllstoff : RTV-2 (A) : RTV-2 (B) (m/m/m) | Füllgrad PMK % / PVK % |
|---|---|---|---|
| 5-1 | 1 | 3,8 g : 19,1 g : 2,1 g | 15% / 4,4% |
| 5-2 | 1 | 5,0 g : 18,0 g : 2,0 g | 20% / 6,1 % |
| 5-3 | 1 | 6,3 g : 16,9 g : 1,9 g | 25% / 8,0% |
| 5-4 | 1 | 7,5 g : 15,8 g : 1,7 g | 30% / 10,0% |
| 5-5 | 1 | 8,8 g : 14,6 g : 1,6 g | 35% / 12,3% |
| 5-6 | 2 | 6,3 g : 16,9 g : 1,9 g | 25% / 10,6% |
| 5-7 | 2 | 12,7 g : 11,1 g : 1,2 g | 58% / 26,8% |
| 5-8 | 3 | 6,3 g : 16,9 g : 1,9 g | 25% / 17,4% |
| 5-9 | 3 | 9,2 g : 14,3 g : 1,6 g | 36,6% / 26,8% |
| 5-10 | 4 | 3,8 g : 19,1 g : 2,1 g | 15% / 10,7% |
| 5-11 | 4 | 5,0 g : 18 g : 2,0 g | 20% / 14,5% |
| 5-12 | 4 | 6,3 g : 16,9 g : 1,9 g | 25% / 18,5% |
| 5-13 | 4 | 7,5 g : 15,8 g : 1,7 g | 30% / 22,5% |
| 5-14 | 4 | 8,8 g : 14,6 g : 1,6 g | 35% / 26,0% |
| 5-15 | SiC | 6,3 g : 15,0 g : 3,8 g | 25% / 8,8% |
| 5-16 | SiC | 13,9 g : 10,0 g : 1,1 g | 53,5% / 26,8% |
| 5-17 | ZnO | 6,3 g : 16,9 g : 1,9 g | 25%/6,1% |
| 5-18 | ZnO | 16,3 g : 7,9 g : 0,9 g | 65,1% / 26,8% |

### Beispiel 6:

### Herstellung von Prüfkörpern in LSR

Die Proben aus "Liquid Silicone Rubber" LSR werden analog Beispiel 5 hergestellt, allerdings in einer Gießform aus Polypropylen für 20 min bei 120 °C in einer Heißpresse ausgehärtet. Für LSR beträgt das Mischverhältnis der Komponenten A und B 1:1 (siehe Tabelle 4).

**Tabelle 4: Prüfkörper aus LSR Silikon:**

| Beispiel | Füllstoff aus Beispiel | Füllstoff : LSR (A) : LSR (B) (m/m/m) | Füllgrad PMK % / PVK % |
|---|---|---|---|
| 6-1 | 1 | 4,0 g : 8,0 g : 8,0 g | 20% / 15,0% |
| 6-2 | 1 | 7,0 g : 6,5 g : 6,5 g | 35% / 27,5% |

### Beispiel 7:

### Herstellung von Prüfkörpern aus Epoxidharz

Die in Tabelle 5 angegebenen Mengen an Füllstoffen aus Beispiel 4 werden in einer Dose mit den genannten Anteilen an einem Bindemittel vorgelegt, das aus jeweils aus 4% Benzylalkohol, 76% ARALDIT DBF BD und 20% ARADUR HY 2966 besteht, grob vorgemischt und in einem Vakuumspeedmixer (Firma Hauschild) bei auf 4 mbar reduziertem Druck nacheinander 2 Minuten bei 1000 Umdrehungen pro Minute, 2 Minuten bei 1800 Umdrehungen pro Minute und 30 Sekunden bei 800 Umdrehungen pro Minute homogenisiert. Das gemischte bzw. homogenisierte Epoxidharz wird nun zügig in eine Gießkammer aus Teflon gegossen und bei 60°C etwa 1 Stunde lang gehärtet. Nach dem Abkühlen der Probe wird die Epoxid-Platte entnommen und der kreisförmige Prüfkörper ausgebohrt. Die Schichtdicke wird mit einer Messuhr ermittelt.

**Tabelle 5: Prüfkörper aus Epoxid**

| Beispiel | Füllstoff aus Beispiel | Zusammensetzung Füllstoff : Bindemittel | Füllgrad PMK% / PVK % |
|---|---|---|---|
| 7-1 | 4 | 20 g : 80 g | 20% / 16,2% |
| 7-2 | 4 | 25 g : 75 g | 35% / 29,4% |

### Beispiel 8:

### Herstellung von Prüfkörpern aus HD-PE

Aus dem gemäß Beispiel 1 erzeugten Füllstoff wird auf einem DSE Leistritz Micro 27 Doppelschneckenextruder ein Masterbatch mit 40% in einem HDPE (Purell GA 7760) hergestellt. Dieser wird mit weiterem HDPE auf 30% verdünnt. Aus einem Masterbatch mit 10% werden Verdünnungen mit 5% und 2% erzeugt. Die Extrudate werden abgeschreckt und granuliert.

Aus den Granulaten werden an einer Spritzgießmaschine 60 mm * 90 mm Platten mit 1mm Schichtdicke erzeugt, aus denen mit einem Kernbohrer Prüfkörper mit 50 mm Durchmesser erzeugt werden.

**Tabelle 6: Prüfkörper aus HD-PE**

| Beispiel | Füllstoff | Zusammensetzung | Füllgrad wt% |
|---|---|---|---|
| 8-1 | 1 | Bsp.1 : HDPE 400 g : 600 g | 40% |
| 8-2 | 1 | Bsp.8-1 : HDPE 750 g : 250 g | 30% |
| 8-3 | 1 | Bsp.1 : HDPE 100 g : 900 g | 10% |
| 8-4 | 1 | Bsp.8-3 : HDPE 500 g : 500 g | 5% |
| 8-5 | 1 | Bsp.8-3 : HDPE 200 g : 800 g | 2% |

### Vermessung der Prüfkörper bezüglich ihrer elektrischen Eigenschaften:

Der nichtlinear leitfähige Charakter der Prüfkörper ergibt sich aus einer Strom-Spannung Messung, die folgende Abweichung vom Ohm'schen Verhalten zeigen soll: $U ∼ {I}^{α}$ (1)

Die Abweichung wird durch den Nichtlinearitätsexponenten α beschrieben, der im Falle eines Ohm'schen Widerstandes den Wert 1 hat.

Die Strom-Spannungs-Charakteristik der erzeugten Varistor-Füllstoff / Polymer Prüfkörper wird mit einer Heinzinger 10 kV DC Spannungsquelle (PNChp 10000-20 ump) und einem Kethley pico Amperemeter (6514 System Electrometer) an einer Ringelektrode entsprechend DIN EN 61340-2-3 gemessen.

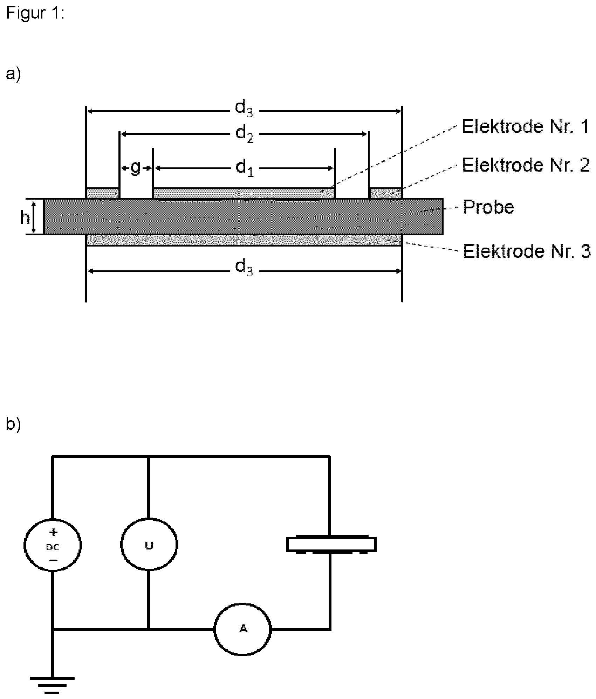

Den schematischen Aufbau der Messvorrichtung sowie die zu beachtenden Masszahlen des Prüfkörpers zeigt Figur 1.

Zur Normalisierung der Ergebnisse wird, mit den in Figur 1 benannten Abmessungen der Probe und der Elektrode, entsprechend den Formeln (2-4) die elektrische Feldstärke E und die Stromdichte J berechnet: $E = V / h$ (2) $J = I / A$ (3) $A = {\left({d}_{1}+g\right)}^{2} ∗ π / 4$ (4) $α = ln \left({J}_{2}/{J}_{1}\right) / ln \left({E}_{2}/{E}_{1}\right)$ (5)
*V* = Spannung in Volt (V)
*I* = Stromstärke in Ampere (A)
*A* = effektive Elektrodenfläche (m²)
*h* = Elektrodenabstand (Probendicke): -0,5 mm
*d₁-d₄* = Elektroden Durchmesser (siehe Figur 1)
*d₁* = Durchmesser Zentralelektrode: 25 mm
*g* = Abstand Ring Elektrode zur Zentralelektrode: 2,5 mm
*α* = Nichtlinearitätsexponent
*J₁, J₂* = Stromdichte in 2 Punkten der Messung
*E₁, E₂* = elektrische Feldstärke in 2 Punkten der Messung

Die Messungen des Stromes werden mit einer stufenförmigen Spannungsrampe bei Raumtemperatur und relativer Luftfeuchte zwischen 20 % und 30 % durchgeführt.

In einer doppelt logarithmischen Auftragung der E-J-Charakteristik ergibt sich nach Gleichung (5) die Nichtlinearität als Steigung der Kurven. Dabei wird in der Regel nur der Anteil größer 5000 kV/m zur Berechnung des Nichtlinearitätsexponenten α berücksichtigt.

Impedanz-Messungen werden bei 25°C an einem Novocontrol GmbH Alpha-A Broadband Dielectric Spectrometer mit Phecos Temperatur Kontrolle zwischen 0,01 Hz und 100 MHz an den PE-Prüfkörpern aus Beispiel 8-1 bis 8-5 vorgenommen.

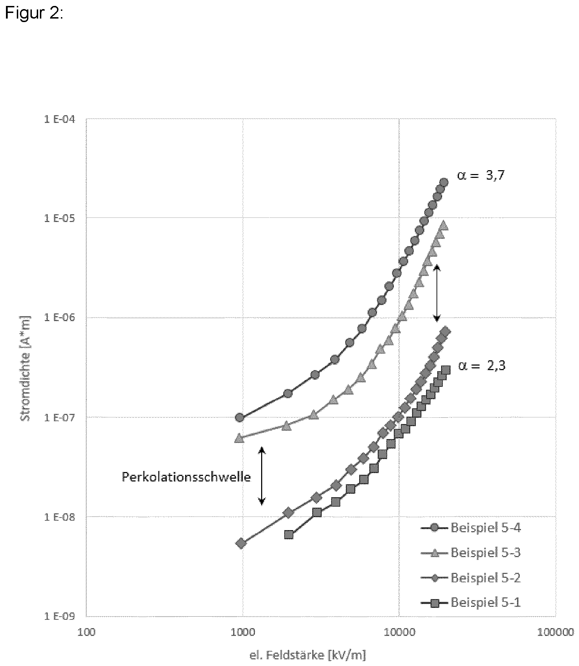

### Figur 2, Beispiele 5-1 bis 5-4:

Der plättchenförmige Varistor-Füllstoff aus Beispiel 1 zeigt eine deutliche nichtlinear elektrische Leitfähigkeit. Bei Feldstärken zwischen 1000 kV/m und 20000 kV/m nimmt dieser nichtlineare Charakter (Steigung in Abbildung 2) deutlich sichtbar zu und die Silikon-Komposite erreichen ab circa 5000 kV/m einen Nichtlinearitätsexponenten α von 2,3 bis 3,7. In den Beispielen 5-1 bis 5-4 nimmt die Pigmentmassekonzentration PMK der Varistor-Füllstoffe von 15% bis 30% in 5%-Schritten zu. Die Perkolationsschwelle ist als deutlicher Abstand zwischen den Kurven von Beispiel 5-2 und Beispiel 5-3 zu erkennen. Die Kurven überstreichen im betrachteten Feldstärkebereich eine Stromdichte von ca. zweieinhalb Zehnerpotenzen, wobei die Grundleitfähigkeit abhängig ist vom Varistor-Gehalt im Komposit. Eine Probe mit der Pigmentvolumenkonzentration PVK 26,8% (58,5 %PMK) lässt sich mit dem plättchenförmigen Varistor-Füllstoff nicht mehr herstellen. Bei derartig hohen Füllgraden neigen plättchenförmige Füllstoffe zur Ausbildung von rheologisch ungünstigen so genannten "Kartenhaus" Strukturen innerhalb der Polymermatrix.

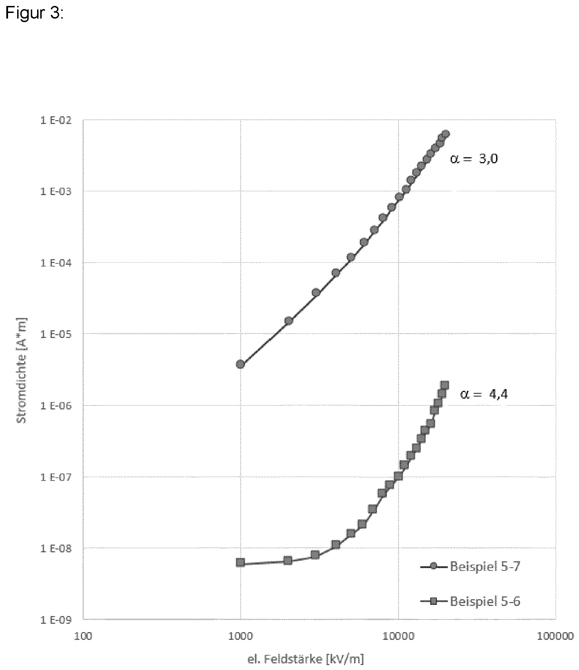

### Figur 3, Beispiele 5-6 und 5-7:

Der kugelförmige Varistor-Füllstoff aus Beispiel 2 zeigt bei einem Füllgrad von 25 % PMK ab ca. 5000 kV/m eine noch stärker ausgeprägte nichtlinear elektrische Leitfähigkeit mit einem Nichtlinearitätsexponenten α von 4,4 über ca. 2 Größenordnungen der Stromdichte. Hohe Füllgrade mit einer Pigmentvolumenkonzentration von 26,8 %, was für diesen Füllstoff einer Pigmentmassekonzentration von 50,8 % entspricht, führen zu einem flacheren Kurvenverlauf, also einem etwas geringerem Nichtlinearitätsexponenten α von 3, aber dementsprechend höherer Leitfähigkeit (die ganze Kurve ist zu höherer Stromdichte verschoben)

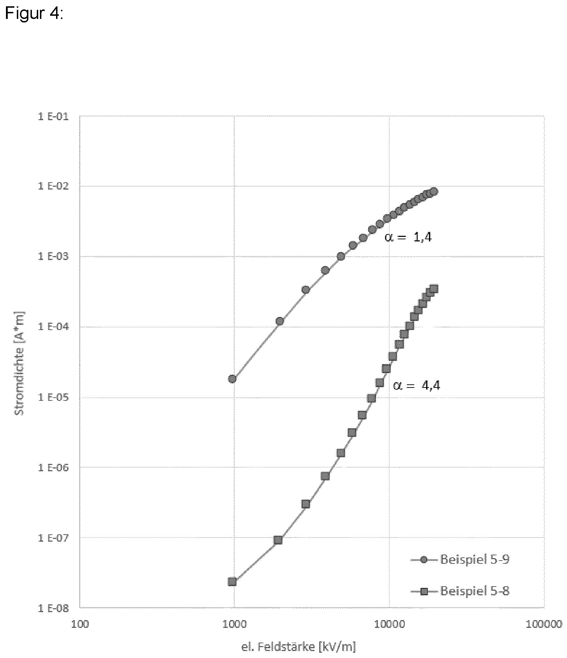

### Figur 4, Beispiele 5-8 und 5-9

Der kugelförmige Varistor Füllstoff aus Beispiel 3 zeigt schon bei einem Füllgrad von 25 % PMK über den gesamten Messbereich eine ausgeprägt nichtlinear elektrische Leitfähigkeit über vier Größenordnungen der Stromdichte mit einem Nichtlinearitätsexponenten α von 4,4. Hohe Füllgrade mit einer Pigmentvolumenkonzentration von 26,8 %, führen zu einem flacheren Kurvenverlauf, also einem etwas geringerem Nichtlinearitätsexponenten α von 1,4 und zu höherer Leitfähigkeit.

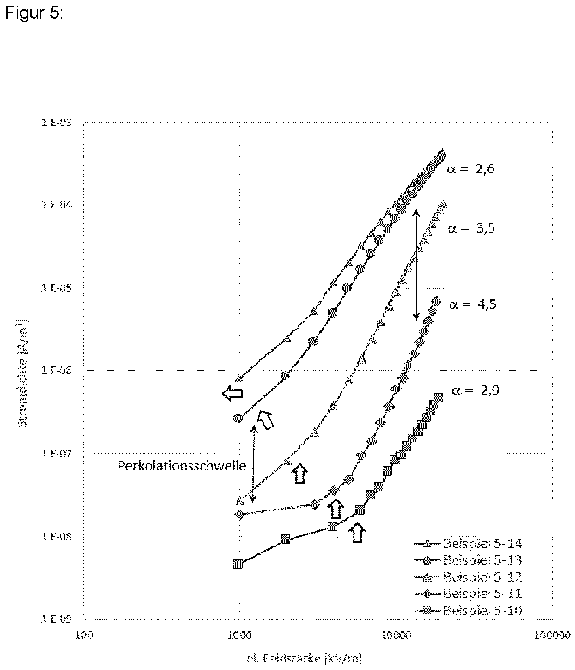

### Figur 5, Beispiele 5-10 bis 5-14

Der kugelförmige Varistor-Füllstoffs aus Beispiel 4 zeigt eine deutliche nichtlinear elektrische Leitfähigkeit. Der Schaltpunkt (in Figur 5 mit einem Pfeil 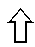 gekennzeichnet), an dem sich der nichtlineare Charakter der Beispiel - Komposite einstellt, wandert mit höherem Füllgrad zu kleineren elektrischen Feldstärken. In Beispiel 5-10 mit einem Füllgrad von 15% PMK liegt dieser Schaltpunkt bei ca. 6000 kV/m. Bei Beispiel 5-11 mit 20 % PMK liegt der Schaltpunkt schon bei 4000 kV/m und bei Beispiel 5-12 mit 25% PMK bei ca. 2000 kV/m. Bei Beispiel 5-13 mit 30 % PMK ist der Krümmungsbereich am Beginn der Messung mit 1000 kV/m scheinbar gerade erfasst und bei Beispiel 5-14 mit 35 % PMK liegt er unterhalb dieser Messgrenze. Am steilsten ist die Kurve des Materials aus Beispiel 5-11 kurz vor der Perkolationsschwelle mit einem Nichtlinearitätsexponenten α von 4,5. Auch hier nimmt die Leitfähigkeit der Materialien mit zunehmendem Füllgrad zu und die Kurven der Beispiele verschieben sich zu höheren Stromdichten.

### Figur 6:

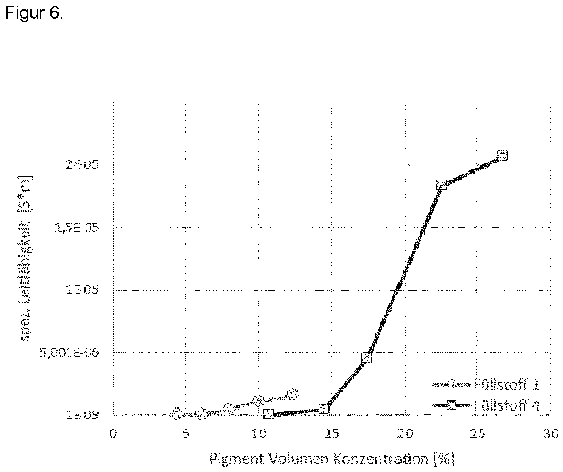

Der Perkolationseffekt ist bei Kompositen mit den kugelförmigen Materialien mit geringer Dichte aus Beispiel 4 viel stärker ausgeprägt als bei jenen mit plättchenförmigen Materialien hoher Dichte aus Beispiel 1 (Figur 6). Bei gleicher Einwaage (PMK 15 % - 35 % für Komposite mit Beispiel 1 und Beispiel 4 in RTV-2 Silikon) erreichen diese Varistor-Füllstoffe eine deutlich höhere Volumenfüllung (PVK in RTV-2 Silikon: 4,4 % - 12,3 % mit Beispiel 1 und 10,7 % - 26,8 % mit Beispiel 4).

### Figuren 7 bis 9:

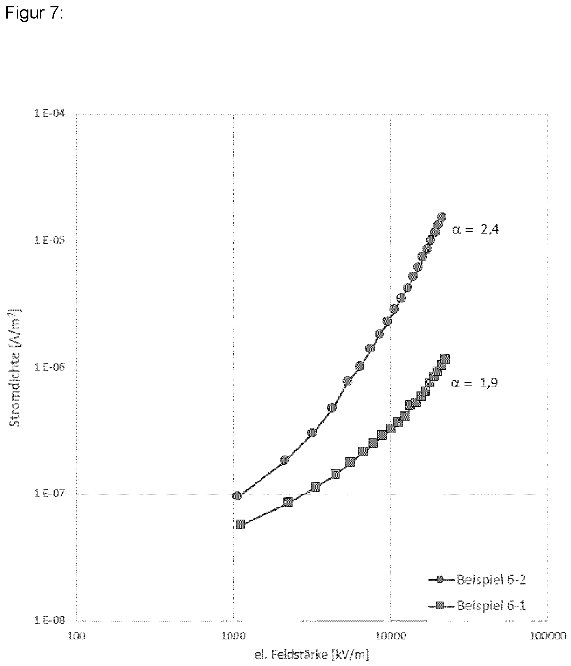

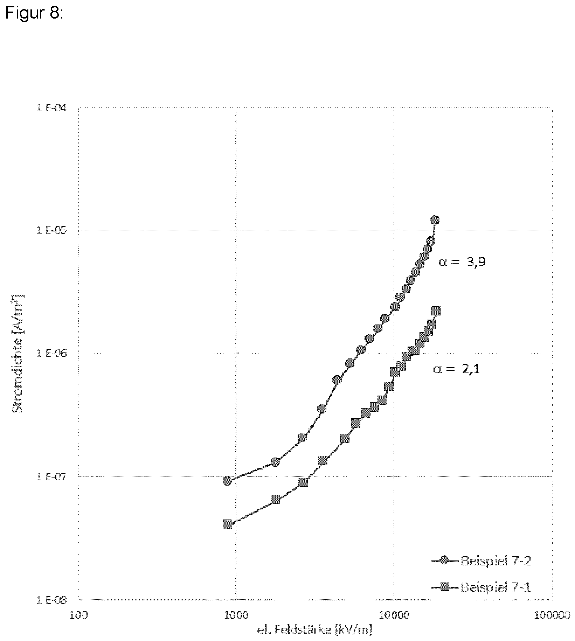

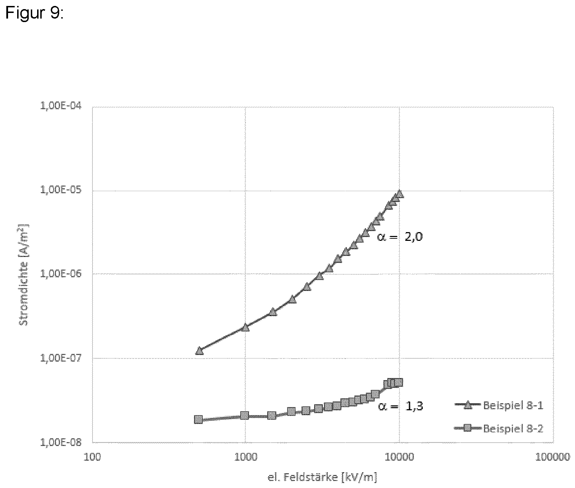

Die in den Beispielen 1 bis 4 erzeugten Materialien lassen sich in den verschiedensten Polymermatrizes zu feldsteuernden Isolierstoffen verarbeiten. Zu erkennen ist das am nichtlinear elektrisch leitfähigen Charakter dieser Komposite. Die in Figur 7 dargestellten Kurven zeigen diese Charakteristik des Varistor-Füllstoffes aus Beispiel 1 in einem stärker vernetzten LSR Silikon (Beispiele 6-1 und 6-2) und in Figur 8 werden Kurven mit nichtlinear elektrischer Leitfähigkeit des Varistor-Füllstoffes aus Beispiel 4 in einem Epoxid Verbund gezeigt (Beispiele 7-1 und 7-2). Das elektrisch leitfähige Verhalten ergibt sich analog zu den bisher gezeigten Kompositen. Neben diesen Zwei-Komponenten Systemen werden in Figur 9 die nichtlinear elektrischen Eigenschaften eines Komposites mit einem HD-PE gezeigt, das durch Extrusion mit den Partikeln direkt (Beispiel 8-1) oder aus einem Master Batch (Beispiel 8-2) erzeugt wird.

### Figur 10:

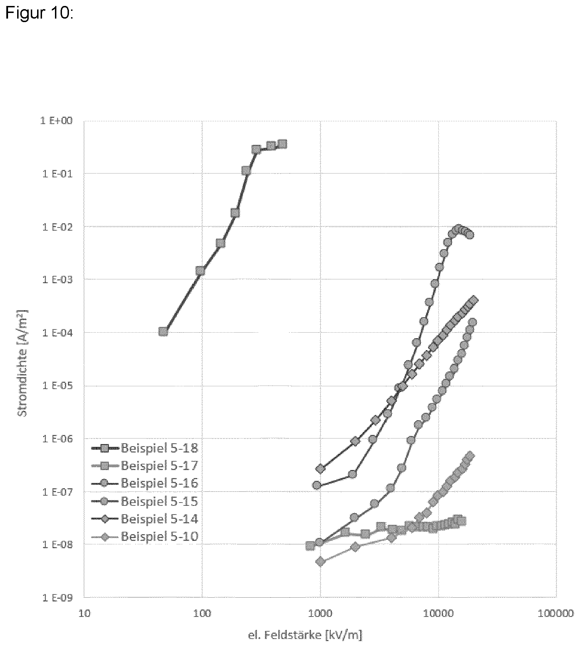

In Abbildung 10 wird der Vergleich zwischen den erfindungsgemäßen Varistor-Füllstoffen (hier Beispiel 4 in den Formulierungen aus Beispiel 5-10 und 5-14) und anderen feldsteuernden Materialien gezogen. Dazu wird ein Siliziumcarbid (Beispiel 5-15/ 5-16) und ein Zinkoxid Mikrovaristor (Beispiel 5-17/ 5-18) ausgewählt. Zur besseren Vergleichbarkeit wird einmal eine Formulierung angesetzt, die jeweils einer Pigmentmassekonzentration von 25 % PMK (Beispiele 5-10, 5-15 und 5-17) entspricht und eine weitere Formulierung mit einer hohen Konzentration in gleicher Volumenfüllung von 26,8 % PVK (Beispiel 5-14, 5-16 und 5-18).

Die Kurve des Varistor-Füllstoffs aus Beispiel 5-15 überschneidet die Kurve von Siliziumcarbid aus Beispiel 5-16. Je nach Konzentration lassen sich aber auch kleinere Leitfähigkeiten im Isolationsmaterial einstellen als mit Siliziumcarbid, wie der Vergleich der Kurven aus den Beispielen 5-10 (Varistor-Füllstoff) und 5-15 (Siliziumcarbid) zeigt. Dagegen wird, mit der Kurve der mit Zinkoxid-Microvaristor gefüllten Beispiele 5-17 und 5-18 deutlich, dass dieses Material schwer zu kontrollieren ist. Entweder zeigt es mit niedriger Füllung (Beispiel 5-17) nur eine geringe Nichtlinearität oder es ist bei hoher Füllung (Beispiel 5-18) deutlich zu leitfähig. Der Schaltpunkt zum nichtlinear leitfähigen Bereich liegt dann bei sehr geringen elektrischen Feldstärken (<<100 kV/m).

### Figur 11:

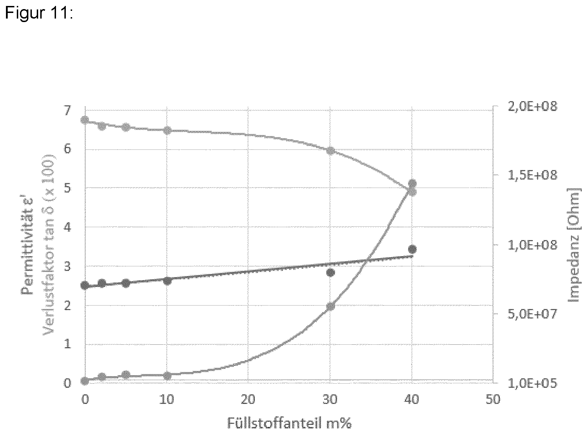

Durch die dielektrischen Messungen an einem Impedanz Spektrometer lassen sich die Eigenschaften der erfindungsgemäßen Varistor-Füllstoffe auch in Wechselstrom Umgebung bestimmen. In Figur 11 werden die Impedanz (Wechselstrom Widerstand) Z sowie die Permittivität ε' und der Verlustfaktor tan δ der Komposite aus dem Varistor-Füllstoff aus Beispiel 1 und einem HD-PE, in den Formulierungen aus den Beispielen 8-1 bis 8-5, bei 50 Hz dargestellt. Die Permittivität ε' steigt nur langsam mit dem Füllstoffanteil an (als Mittelwert der Anteile von Polyethylen und dem dotierten Varistor-Füllstoff). Dagegen deuten die Impedanz, aber auch der Verlustfaktor die Form einer klassischen Perkolationskurve mit ihrer Stufe ab ca. 25 % Füllstoffanteil an. Permittivität und Verlustfaktor sind immer noch sehr klein. Für reines HDPE wird in der Literatur ein Wert von ca. 2,4 für die Permittivität und von 2*10⁻⁴ für den Verlustfaktor angegeben. Der gemessene Verlustfaktor für das ungefüllte HDPE liegt allerdings schon bei 4*10⁻² und ist erst bei einem Füllgrad von 37 Gewichts % an Varistor-Füllstoff um ein Zehnfaches übertroffen.

## Patentansprüche

1. Partikulärer Füllstoff, welcher aus Trägerpartikeln und einer die Trägerpartikel jeweils umhüllenden Beschichtung besteht, **dadurch gekennzeichnet, dass** die Trägerpartikel mindestens eine Aluminiumverbindung oder Siliziumverbindung enthalten oder jeweils aus dieser bestehen und die Beschichtung ein mit Niob und mindestens einem weiteren Element dotiertes Titandioxid enthält, **dadurch gekennzeichnet, dass** das Titandioxid neben Niob mit mindestens einem weiteren Element, ausgewählt aus der Gruppe bestehend aus Mn, Cr und Ce, dotiert ist.

2. Partikulärer Füllstoff gemäß Anspruch 1, **dadurch gekennzeichnet, dass** die Trägerpartikel Aluminiumoxid, Siliziumdioxid oder ein Alumosilikat enthalten oder jeweils daraus bestehen.

3. Partikulärer Füllstoff gemäß Anspruch 2, **dadurch gekennzeichnet, dass** die Trägerpartikel aus Aluminiumoxid, Siliziumdioxid, Mullit, Flugasche, Kaolinit, Bimsstein oder Perlit bestehen.

4. Partikulärer Füllstoff gemäß einem oder mehreren der Ansprüche 1 bis 3, **dadurch gekennzeichnet, dass** die Trägerpartikel plättchenförmig, kugelförmig oder isotrop unregelmäßig geformt vorliegen.

5. Partikulärer Füllstoff gemäß einem oder mehreren der Ansprüche 1 bis 4, **dadurch gekennzeichnet, dass** er eine Dichte im Bereich von 1,5 bis 4,5 g/cm³ aufweist. Sie setzt sich zusammen aus dem Mittelwert der Dichten von Trägerpartikel und Beschichtung.

6. Partikulärer Füllstoff gemäß einem oder mehreren der Ansprüche 1 bis 5, **dadurch gekennzeichnet, dass** die Dotierung in den folgenden Kombinationen erfolgt: Nb, Mn; Nb, Mn, Cr; Nb, Mn, Ce; Nb, Cr; Nb, Cr, Ce; Nb, Ce; oder Nb, Mn, Cr, Ce.

7. Partikulärer Füllstoff gemäß einem oder mehreren der Ansprüche 1 bis 6, **dadurch gekennzeichnet, dass** die Dotierung im Titandioxid in einer Menge von 0,01 bis 5 Atom-% vorliegt.

8. Partikulärer Füllstoff gemäß einem oder mehreren der Ansprüche 1 bis 7, **dadurch gekennzeichnet, dass** er eine mittlere Partikelgröße im Bereich von 1 bis 150 µm aufweist. und mittels Laserdiffraktionsmethode bestimmt wird.

9. Partikulärer Füllstoff gemäß einem oder mehreren der Ansprüche 1 bis 8, **dadurch gekennzeichnet, dass** die Beschichtung in granulärer Form auf den Trägerpartikeln vorliegt.

10. Verfahren zur Herstellung eines partikulären Füllstoffs gemäß einem oder mehreren der Ansprüche 1 bis 9, **dadurch gekennzeichnet, dass** Trägerpartikel, die mindestens eine Aluminiumverbindung oder Siliziumverbindung enthalten oder jeweils aus dieser bestehen, in wässriger Suspension bei einem jeweils geeigneten pH-Wert mit einer Beschichtung versehen werden, die mindestens eine Titanverbindung, mindestens eine Niobverbindung und mindestens eine Verbindung eines weiteren Elementes enthält, ausgewählt aus der Gruppe bestehend aus Mn, Cr und Ce, und dass die mit der Beschichtung versehenen Trägerpartikel anschließend getrocknet und geglüht werden, wobei die Beschichtung in ein mit Niob und mindestens einem anderen Element dotiertes Titandioxid in granulärer Form überführt wird.

11. Verfahren gemäß Anspruch 10, **dadurch gekennzeichnet, dass** die Trägerpartikel plättchenförmig, kugelförmig oder isotrop unregelmäßig geformt vorliegen und Aluminiumoxid, Siliziumdioxid oder ein Alumosilikat enthalten oder jeweils daraus bestehen.

12. Verfahren gemäß Anspruch 10 oder 11, **dadurch gekennzeichnet, dass** die Trägerpartikel aus Aluminiumoxid, Siliziumdioxid, Mullit, Flugasche, Kaolinit, Bimsstein oder Perlit bestehen.

13. Verwendung eines partikulären Füllstoffs gemäß einem oder mehreren der Ansprüche 1 bis 9 zur Pigmentierung von Beschichtungszusammensetzungen und Formmassen.

14. Verwendung gemäß Anspruch 13, **dadurch gekennzeichnet, dass** die Beschichtungszusammensetzung oder Formmasse Silikone, EPDM, Polyurethane, Polyethylene, Epoxide, Phenolharze oder einen Keramikwerkstoff enthält oder daraus besteht.

15. Verwendung gemäß Anspruch 13 oder 14, **dadurch gekennzeichnet, dass** der partikuläre Füllstoff in der Beschichtungszusammensetzung oder Formmasse mit einer Pigmentvolumenkonzentration im Bereich von 3-33 Vol.% vorliegt, bezogen auf das Volumen der Beschichtungszusammensetzung oder Formmasse.

16. Verwendung gemäß einem oder mehreren der Ansprüche 13 bis 15, **dadurch gekennzeichnet, dass** der partikuläre Füllstoff in der Beschichtungszusammensetzung oder Formmasse nichtlineare elektrische Eigenschaften aufweist.

## Claims

1. Particulate filler consisting of carrier particles and a coating respectively enclosing the carrier particles, **characterized in that** the carrier particles comprise or in each case consist of at least one aluminum compound or silicon compound and the coating comprises a titanium dioxide doped with niobium and at least one further element, **characterized in that** the titanium dioxide has been doped not only with niobium but also with at least one further element selected from the group consisting of Mn, Cr and Ce.

2. Particulate filler according to Claim 1, **characterized in that** the carrier particles comprise or in each case consist of aluminum oxide, silicon dioxide or an aluminosilicate.

3. Particulate filler according to Claim 2, **characterized in that** the carrier particles consist of aluminum oxide, silicon dioxide, mullite, fly ash, kaolinite, pumice or pearlite.

4. Particulate filler according to one or more of Claims 1 to 3, **characterized in that** the carrier particles are in platelet form, in spherical form or in isotropically irregular form.

5. Particulate filler according to one or more of Claims 1 to 4, **characterized in that** it has a density in the range from 1.5 to 4.5 g/cm3. The density is composed of the mean of the densities of carrier particles and coating.

6. Particulate filler according to one or more of Claims 1 to 5, **characterized in that** the doping is effected in the following combinations: Nb, Mn; Nb, Mn, Cr; Nb, Mn, Ce; Nb, Cr; Nb, Cr, Ce; Nb, Ce; or Nb, Mn, Cr, Ce.

7. Particulate filler according to one or more of Claims 1 to 6, **characterized in that** the doping is present in the titanium dioxide in an amount of 0.01 to 5 atom%.

8. Particulate filler according to one or more of Claims 1 to 7, **characterized in that** it has a median particle size in the range from 1 to 150 µm and is determined by a laser diffraction method.

9. Particulate filler according to one or more of Claims 1 to 8, **characterized in that** the coating is in granular form on the carrier particles.

10. Process for producing a particulate filler according to one or more of Claims 1 to 9, **characterized in that** carrier particles which comprise or consist in each case of at least one aluminum compound or silicon compound are provided in aqueous suspension at a respectively suitable pH with a coating comprising at least one titanium compound, at least one niobium compound and at least one compound of a further element selected from the group consisting of Mn, Cr and Ce, and **in that** the carrier particles provided with the coating are subsequently dried and calcined, wherein the coating is converted to a titanium dioxide doped with niobium and at least one other element in granular form.

11. Process according to Claim 10, **characterized in that** the carrier particles are in platelet form, in spherical form or in isotropically irregular form and comprise or consist in each case of aluminum oxide, silicon dioxide or an aluminosilicate.

12. Process according to Claim 10 or 11, **characterized in that** the carrier particles are composed of aluminum oxide, silicon dioxide, mullite, fly ash, kaolinite, pumice or pearlite.

13. Use of a particulate filler according to one or more of Claims 1 to 9 for pigmentation of coating compositions and molding compounds.

14. Use according to Claim 13, **characterized in that** the coating composition or molding compound comprises or consists of silicones, EPDM, polyurethanes, polyethylenes, epoxides, phenolic resins or a ceramic material.

15. Use according to Claim 13 or 14, **characterized in that** the particulate filler is present in the coating composition or molding compound with a pigment volume concentration in the range of 3-33% by volume, based on the volume of the coating composition or molding compound.

16. Use according to one or more of Claims 13 to 15, **characterized in that** the particulate filler in the coating composition or molding compound has nonlinear electrical properties.

## Revendications

1. Charge particulaire qui est constituée de particules de support et d'un revêtement enveloppant chacune les particules de support, **caractérisée en ce que** les particules de support contiennent au moins un composé d'aluminium ou un composé de silicium ou sont constituées de chacun de ceux-ci et le revêtement contient un dioxyde de titane dopé avec du niobium et au moins un autre élément, **caractérisée en ce que** le dioxyde de titane est dopé, outre avec le niobium, avec au moins un autre élément choisi dans le groupe constitué par Mn, Cr et Ce.

2. Charge particulaire selon la revendication 1, **caractérisée en ce que** les particules de support contiennent de l'oxyde d'aluminium, du dioxyde de silicium ou un aluminosilicate ou sont chacune constituées de celui-ci.

3. Charge particulaire selon la revendication 2, **caractérisée en ce que** les particules de support sont constituées d'oxyde d'aluminium, de dioxyde de silicium, de mullite, de cendres volantes, de kaolinite, de pierre ponce ou de perlite.

4. Charge particulaire selon l'une ou plusieurs des revendications 1 à 3, **caractérisée en ce que** les particules de support sont en forme de plaquettes, en forme de boule ou isotropes irrégulières.

5. Charge particulaire selon l'une ou plusieurs des revendications 1 à 4, **caractérisée en ce qu'**elle présente une masse volumique dans la plage de 1,5 à 4,5 g/cm3. Elle est composée de la valeur moyenne des masses volumiques des particules de support et du revêtement.

6. Charge particulaire selon l'une ou plusieurs des revendications 1 à 5, **caractérisée en ce que** le d'autant est réalisé dans les combinaisons suivantes : Nb, Mn ; Nb, Mn, Cr ; Nb, Mn, Ce ; Nb, Cr ; Nb, Cr, Ce ; Nb, Ce ; ou Nb, Mn, Cr, Ce.

7. Charge particulaire selon l'une ou plusieurs des revendications 1 à 6, **caractérisée en ce que** le dopant est présent dans le dioxyde de titane en une quantité de 0,01 à 5 % atomique.

8. Charge particulaire selon l'une ou plusieurs des revendications 1 à 7, **caractérisée en ce qu'**elle présente une taille moyenne de particule dans la plage de 1 à 150 µm, et est déterminée au moyen d'une méthode de diffraction laser.

9. Charge particulaire selon l'une ou plusieurs des revendications 1 à 8, **caractérisée en ce que** le revêtement est présent sous forme granulaire sur les particules de support.

10. Procédé de préparation d'une charge particulaire selon une ou plusieurs des revendications 1 à 9, **caractérisé en ce que** des particules de support, qui contiennent au moins un composé d'aluminium ou un composé de silicium ou sont constituées de chacun d'eux, en suspension aqueuse à un pH approprié sont pourvues d'un revêtement qui comprend au moins un composé de titane, contient au moins un composé du niobium et au moins un composé d'un autre élément choisi dans le groupe constitué par Mn, Cr et Ce, et que les particules de support pourvues du revêtement sont ensuite séchées et recuites, le revêtement étant transformé en un dioxyde de titane sous forme granulaire dopé avec du niobium et avec au moins un autre élément.

11. Procédé selon la revendication 10, **caractérisé en ce que** les particules de support sont en forme de plaquettes, en forme de boule ou isotropes irrégulières et contiennent de l'oxyde d'aluminium, du dioxyde de silicium ou un aluminosilicate ou sont constituées de chacun de ceux-ci.

12. Procédé selon la revendication 10 ou 11, **caractérisé en ce que** les particules de support sont constituées d'oxyde d'aluminium, de dioxyde de silicium, de mullite, de cendres volantes, de kaolinite, de pierre ponce ou de perlite.

13. Utilisation d'une charge particulaire selon une ou plusieurs des revendications 1 à 9 pour la pigmentation de compositions de revêtement et de masses à mouler.

14. Utilisation selon la revendication 13, **caractérisée en ce que** la composition de revêtement ou la masse à mouler contient des silicones, EPDM, des polyuréthanes, des polyéthylènes, des époxydes, des résines phénoliques ou un matériau de céramique ou en est constitué.

15. Utilisation selon la revendication 13 ou 14, **caractérisée en ce que** la charge particulaire est présente dans la composition de revêtement ou la masse à mouler avec une concentration volumique pigmentaire dans la plage de 3-33 % en volume, par rapport au volume de la composition de revêtement ou de la masse à mouler.

16. Utilisation selon une ou plusieurs des revendications 13 à 15, **caractérisée en ce que** la charge particulaire dans la composition de revêtement ou la masse à mouler présente des propriétés électriques non linéaires.
